# EUROPÄISCHE PATENTSCHRIFT

(11) **EP 2 116 451 B1**
(45) Veröffentlichungstag und Bekanntmachung des Hinweises auf die Patenterteilung: **12.10.2011**
(21) Anmeldenummer: 08103912.5
(22) Anmeldetag: 09.05.2008
(51) Int. Cl.: B62D 25/20, B62D 29/04, B62D 33/04, B60P 7/08, B60P 7/14, B62D 53/06

(54) **Sattelauflieger mit einem Unterfahrschutz für einen Sattelzug**
Semi-trailer with underride protection for a trailer truck
Semi-remorque doté d'une protection anti-encastrement pour un train routier

(43) Veröffentlichungstag der Anmeldung: 11.11.2009
(73) Patentinhaber: Schmitz Cargobull AG, 48341 Altenberge (DE)
(72) Erfinder: Hessling, Alfons, 48683 Ahaus (DE); Küpers, Josef, 48703 Stadtlohn (DE); Beelmann, Reinhard, 45721 Haltern am See (DE); Niewerth, Markus, 48683 Ahaus (DE)
(74) Vertreter: Cohausz & Florack

(56) Entgegenhaltungen:
- DE-B3- 10 321 541
- US-A- 3 125 354
- US-A1- 2007 069 500

## Beschreibung

Die Erfindung betrifft Sattelauflieger für einen aus dem Sattelauflieger und einem Zugfahrzeug gebildeten Sattelzug. Solche Sattelauflieger weisen üblicherweise ein Bodenelement auf, das in seinem in Fahrtrichtung hinteren Bereich auf dem Fahrwerkschassis des Sattelaufliegers befestigt ist, während es im Fahrbetrieb mit seinem vorderen Bereich auf der Sattelkupplung des Zugfahrzeugs aufliegt.

Zum Ankuppeln unterfährt die Zugmaschine im Rückwärtsgang mit ihrer Sattelkupplung den aufgebockten Sattelauflieger. Um zu verhindern, dass es dabei zu einer Beschädigung im Bereich der der Zugmaschine zugeordneten Stirnseite des Sattelaufliegers kommt, ist im Bereich dieser Stirnseite üblicherweise ein Unterfahrschutz vorgesehen, der sich über die Breite der Stirnseite erstreckt.

Im Fall, dass die Zugmaschine mit der Gleitfläche der Sattelkupplung gegen den Unterfahrschutz stößt, gleitet der Unterfahrschutz auf der Gleitfläche ab und die Zugmaschine kann trotz des Kontakts mit der Kupplung unter den Sattelauflieger fahren. Größere Schäden an dem Sattelauflieger werden so verhindert. Wenn jedoch die Zugmaschine in einem ungünstigen Winkel auf den Unterfahrschutz trifft oder eine zu große Höhendifferenz zwischen der Sattelkupplung und dem Unterfahrschutz vorliegt, kann es zu einer so großen Beschädigung des Unterfahrschutzes kommen, dass er ersetzt werden muss.

Bei konventionellen Sattelaufliegern wird der Unterfahrschutz üblicherweise als Bauteil genutzt, das als integraler Bestandteil des Sattelaufliegers wesentlichen Anteil an der Formsteifigkeit seines Gesamtaufbaus hat. Dementsprechend aufwändig ist es, einen beschädigten Unterfahrschutz zu entfernen und durch einen neuen zu ersetzen.

Besonders kritisch erweist sich der Austausch des Unterfahrschutzes bei Sattelaufliegern, die als Kühlfahrzeuge dienen und einen Kofferaufbau aufweisen, in dem das Kühlgut transportiert wird. Die hohen Anforderungen, die bei solchen Fahrzeugen an die Wärmeisolation gestellt werden, machen es besonders schwierig, einen defekten Unterfahrschutz in einer Weise zu ersetzen, dass auch nach der Reparatur der Wärmeschutz unverändert gegeben ist.

Aus der US 3,125,354 A ist ein Unterfahrschutz bekannt, der lösbar an der Stirnseite des Kofferaufbaus eines Sattelaufliegers befestigt werden kann. Dazu weist das betreffende Schutzelement Schraubbolzen auf, die an einer Anlagefläche befestigt sind, mit der der Unterfahrschutz im fertig montierten Zustand an der Außenseite eines unteren Rahmenteils der Stirnfläche des Kofferaufbaus anliegt. Zur Befestigung werden die Schraubbolzen in ihnen zugeordnete Öffnungen gesteckt und der Unterfahrschutz mit Hilfe von Muttern, die von der Rückseite des Rahmenteils her auf die Bolzen aufgeschraubt werden, gegen den Rahmenteil verspannt. Problematisch bei dieser Art der Befestigung des Unterfahrschutzes ist, dass er ein ausreichend festes Rahmenteil im Bereich der Stirnseite des Kofferaufbaus voraussetzt, das von seiner Rückseite her zugänglich sein muss. Diese Voraussetzungen sind bei einem modern gestalteten Bodenelement eines Kofferaufbaus in der Regel nicht gegeben.

Darüber hinaus schützt der bekannte Unterfahrschutz nur den stirnseitigen Bereich des Kofferaufbaus, so dass es beim Unterfahren des den Kofferaufbau tragenden Aufliegers nach wie vor zu Beschädigungen im Bereich der vorderen unteren Kante des Aufbaus kommen kann.

Vor diesem Hintergrund lag der Erfindung die Aufgabe zu Grunde, einen Sattelauflieger zu schaffen, bei dem es problemlos möglich ist, den Unterfahrschutz im Fall einer Beschädigung zu ersetzen, und bei dem gleichzeitig ein optimaler Schutz des Kofferaufbaus gewährleistet ist.

Diese Aufgabe ist erfindungsgemäß durch einen gemäß Anspruch 1 ausgebildeten Sattelauflieger gelöst worden. Vorteilhafte Ausgestaltungen eines solchen Sattelaufliegers sind in den auf Anspruch 1 rückbezogenen Ansprüchen angegeben.

Bei einem erfindungsgemäßen Sattelauflieger ist der an dessen in Fahrtrichtung vorderen Stirnseite vorgesehene Unterfahrschutz lösbar mit dem Bodenelement verbunden. Auf diese Weise kann der Unterfahrschutz problemlos ausgetauscht werden, ohne dass dazu in die Gesamtkonstruktion des Aufbaus eines erfindungsgemäßen Sattelaufliegers eingegriffen werden muss.

Erfindungsgemäß ist eine besonders einfache lösbare Montage des Unterfahrschutzes an einem Bodenelement dadurch ermöglicht, dass an dem Unterfahrschutz ein Befestigungsabschnitt ausgebildet ist, der an der Unterseite des Bodenelements anliegt. Um zu verhindern, dass es beim Ein- und Auskuppeln der Zugmaschine zu einem Verhaken zwischen der der Sattelkupplung und dem Sattelauflieger kommt, kann im an die Stirnseite angrenzenden Endbereich des Bodenelements eine sich über die Breite des Befestigungsabschnitts erstreckende Einformung vorgesehen sein, in der der Befestigungsabschnitt sitzt. Die Tiefe der Einformung entspricht dabei vorteilhafterweise der Dicke des Befestigungsabschnitts, so dass die Unterseite des Befestigungsabschnitts im Wesentlichen flächenbündig zur Unterseite des Bodenelements ausgerichtet ist. Auf diese Weise ist ein im Wesentlichen ebener, sprungfreier Übergang zwischen der Unterseite des Bodenelements und dem Unfahrschutz hergestellt, so dass die Sattelkupplung auch dann praktisch ruckfrei entlang des Bodenelements bewegt werden kann, wenn es dabei zu einem reibenden Kontakt kommt.

Die Stabilität, mit der der Unterfahrschutz trotz des Umstandes, dass er erfindungsgemäß nicht als fester Bestandteil in die Gesamtkonstruktion des erfindungsgemäßen Sattelaufliegers einbezogen ist, an dem Sattelauflieger gehalten ist, kann im Fall, dass der Sattelauflieger eine Stirnwand aufweist, dadurch gesteigert werden, dass in dem dem Bodenelement der Stirnwand zugeordneten Anschlussbereich ein Verstärkungselement vorgesehen ist, mit dem der Unterfahrschutz verschraubt ist. Dieses Verstärkungselement kann beispielsweise als in der Stirnwand vorgesehenes Trägerprofil ausgebildet sein, an dem ein an der Stirnwand zu montierendes Anbauteil befestigbar ist. Solche Trägerprofile können dazu dienen, an der Stirnwand ein Kühlgerät zu montieren, das den von dem jeweiligen Aufbau des Sattelaufliegers umschlossenen Kühlraum kühlt.

Besonders kann die Montage und Demontage eines Unterfahrschutzes dann bewerkstelligt werden, wenn der Unterfahrschutz mit dem Bodenelement verschraubt ist. Vorzugsweise erfolgt dabei die Verschraubung von der Unterseite des Sattelaufliegers her. Dies erlaubt es nicht nur, den Unterfahrschutz besonders einfach zu befestigen, sondern stellt auch sicher, dass die Befestigungsstellen im Fall einer Beschädigung des Unterfahrschutzes nach wie vor problemlos zugänglich sind. Sofern ein möglichst glatter Unterboden des Bodenelements angestrebt wird, sollten dabei die Verschraubungen in entsprechende Ausnehmungen eingesenkt werden oder als Senkkopfschrauben ausgeführt werden.

Im Fall, dass an dem Bodenelement eine Verlängerung ausgebildet ist, an der der Unterfahrschutz von der Unterseite des Bodenelements her verschraubt wird, kann es für den Ausgleich von Toleranzen günstig sein, wenn in der Verlängerung eine zum Durchführen des jeweiligen Befestigungsmittels vorgesehene Durchgangsöffnung eingeformt wird, die ein so großes Übermaß aufweist, dass über diese Durchgangsöffnung Toleranzen bei der Überdeckung der einzelnen an dieser Stelle miteinander zu verbindenden Bauteile ausgeglichen werden können. Zu diesem Zweck kann die betreffende Durchgangsöffnung der Verlängerung des Bodenelements als Langloch ausgebildet sein, dessen Längsachse sich vorteilhafterweise in Richtung der Längsachse des erfindungsgemäßen Sattelaufliegers erstreckt. Die Verschraubung erfolgt dann mittels einer Schraube, die durch die Langlochöffnung geführt und gegen ein auf der Oberseite der Verlängerung des Bodenelements sitzendes Befestigungselement, beispielsweise eine Mutter oder ein in einen Stützwinke eingeformtes Gewinde, verschraubt.

Eine zusätzliche Abstützung des Unterfahrschutzes kann dadurch bewerkstelligt werden, dass der Unterfahrschutz mindestens einen Stützabschnitt aufweist, mit dem er gegen die Stirnseite des Sattelaufliegers abgestützt ist. Dabei kann dieser Stützabschnits für eine zusätzliche Verschraubung des Unterfahrschutzes mit der Stirnwand des Sattelaufliegers genutzt werden.

Nachfolgend wird die Erfindung anhand einer Ausführungsbeispiele darstellende Zeichnung näher erläutert. Es zeigen jeweils schematisch:

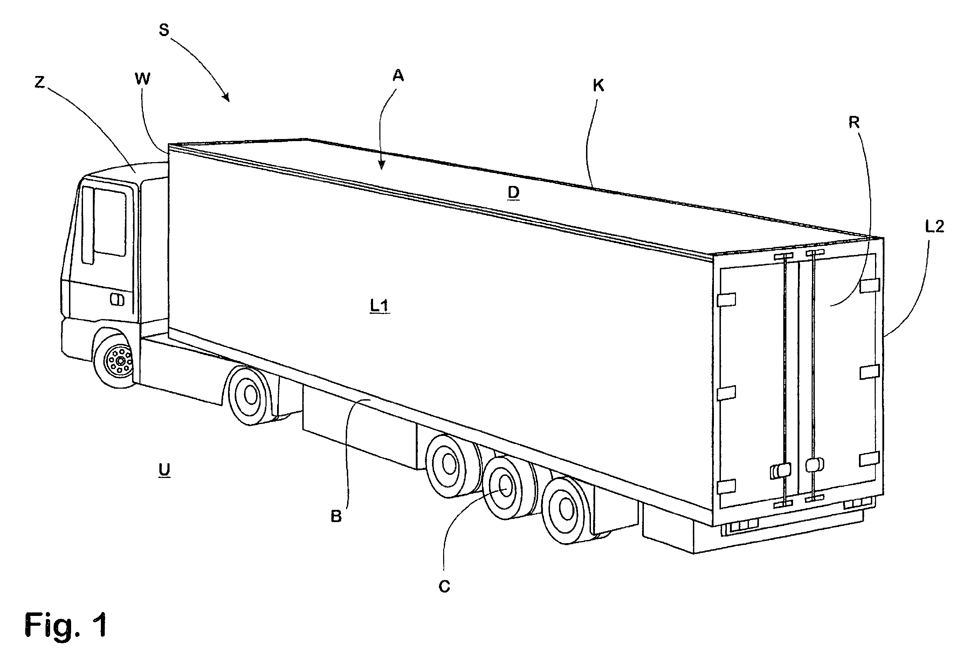

- Fig. 1: einen Sattelzug in einer perspektivischen Ansicht;

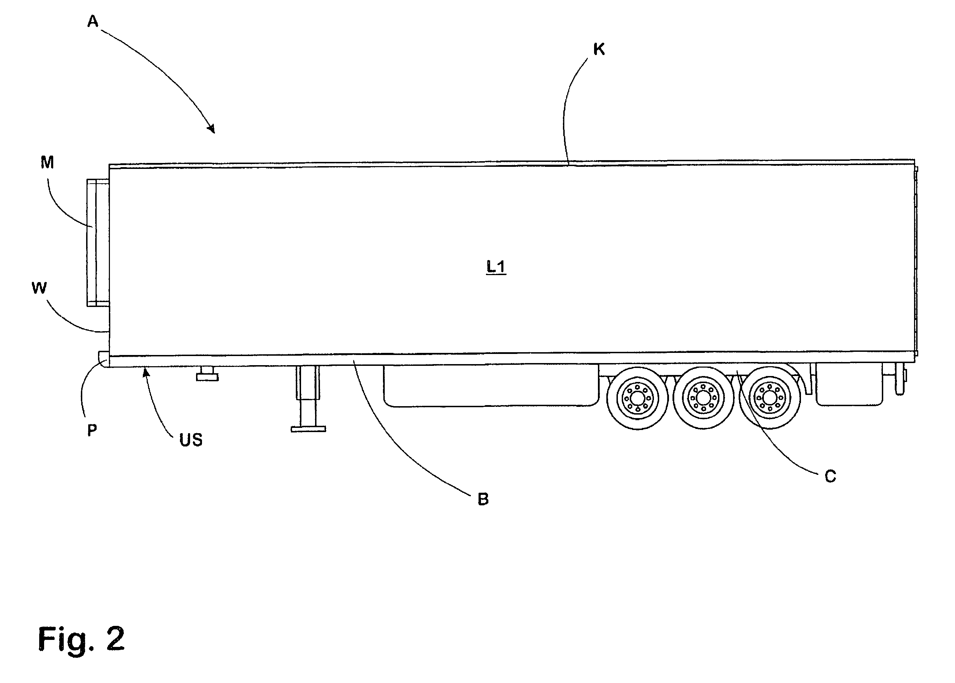

- Fig. 2: den Sattelauflieger des in Fig. 1 dargestellten Sattelzugs in einer seitlichen Ansicht;

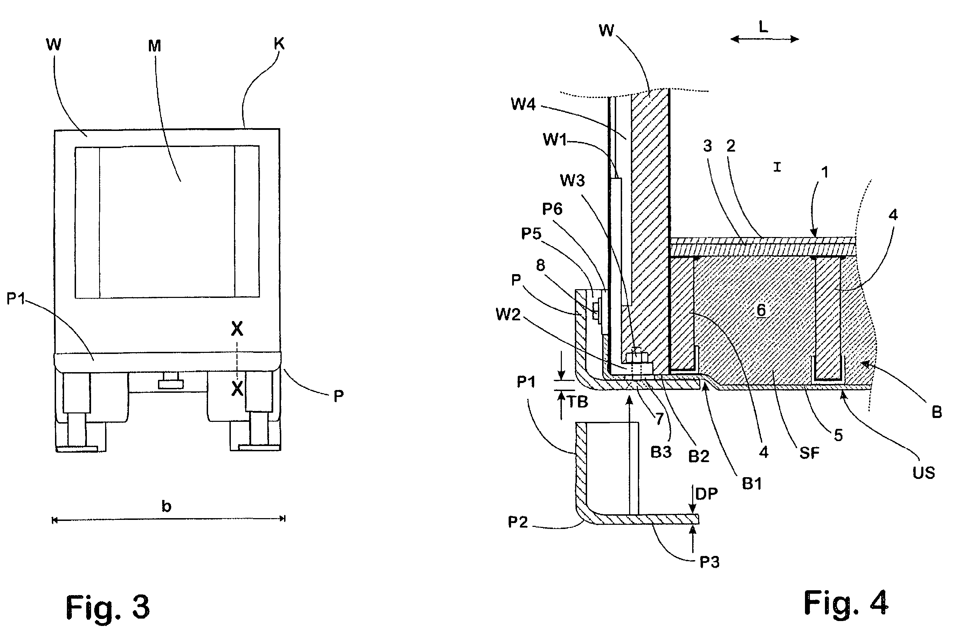

- Fig. 3: den Sattelauflieger in einer stirnseitigen frontalen Ansicht;
- Fig. 4: die Befestigung eines Unterfahrschutzes des in den Figuren 1 bis 3 dargestellten Sattelaufliegers in einem Schnitt entlang der in Fig. 3 eingezeichneten Schnittlinie X-X;

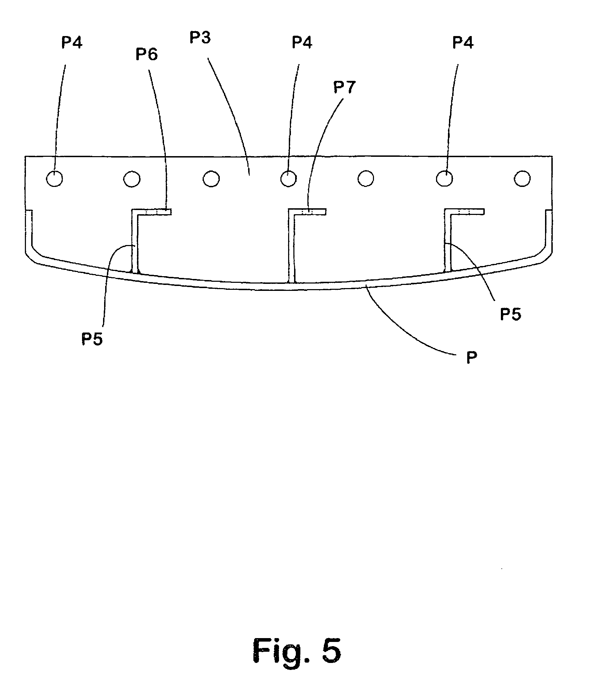

- Fig. 5: den Unterfahrschutz in einer Draufsicht

Der als Kühltransporter ausgelegte Sattelzug S besteht in an sich bekannter Art aus einer Zugmaschine Z und einem Sattelauflieger A.

Der Sattelauflieger A umfasst einen Kofferaufbau K, der auf einem Fahrwerkschassis C montiert ist. Der Kofferaufbau K isoliert den von ihm umgebenen Innenraum I gegen die Wärme der Umgebung U. Dabei ist der Kofferaufbau K aus den Grundelementen "Bodenelement B", "Dach D", "Längseitenwände L1,L2", "Stirnwand W", die der Zugmaschine Z zugeordnet ist, und "Rückwand R" zusammengesetzt, die zur Stirnwand W gegenüberliegend angeordnet ist. An der Stirnwand W ist ein Kühlgerät M montiert, das den Innenraum I des Kofferaufbaus K kühlt.

Das Bodenelement B weist eine obere Decklage 1 auf, die durch eine obere, dem Innenraum I des Kofferaufbaus K zugeordnete Deckschicht 2 und einer die Deckschicht 2 tragende Tragschicht 3 gebildet ist.

Die Tragschicht 3 ist auf Querstegen 4 abgestützt. Die Querstege 4 sind jeweils aus einem Holzwerkstoff hergestellt. Sie weisen eine quaderförmige, langgestreckte Grundform auf und erstrecken sich quer zur Längsrichtung L ausgerichtet über die Breite b des Bodenelements B.

An den Stellen, an denen Anbauteile, wie beispielsweise die Längsträger des Fahrwerkchassis C, an der Unterseite US des Bodenelements B befestigt werden, sind die Querstege als hier nicht sichtbare Querträger ausgebildet.

Die untere Decklage 5 des Bodenelements B ist aus Stahlblech hergestellt und ebenfalls mit den Querstegen 4 bzw. Querträgern verklebt. Die zwischen den Querstegen 4 bzw. Querträgern vorhandenen Kammern 6 des Bodenelements B sind mit einer Schaumfüllung SF gefüllt.

Im Kantenbereich zwischen der Stirnwand W und dem Bodenelement B ist auf der Stirnseite des Sattelaufliegers A lösbar ein Unterfahrschutz P montiert, der sich über die gesamte Breite b des Kofferaufbaus K erstreckt.

Der Unterfahrschutz P ist aus Stahl gefertigt. Er weist einen Prallabschnitt P1 auf, der im fertig montierten Zustand parallel zur Seitenwand W ausgerichtet ist. Der Prallabschnitt P1 geht in einem gleichmäßig gebogenen Übergang P2 in einen Befestigungsabschnitt P3 über, der nach Art einer Zunge von dem Übergangsabschnitt P2 bis unter den stirnseitigen Endabschnitt des Bodenelements B vorsteht.

Der Befestigungsabschnitt P3 sitzt dabei in einer Einformung B1, die in den stirnseitigen Endbereich des Bodenelements eingeformt ist. Die Einformung B1 ist durch eine sich über die Breite des Bodenelements B erstreckende Abkröpfung einer über das Bodenelement B hinausstehenden Verlängerung B2 des die untere Decklage 5 des Bodenelements B bildenden Stahlblechs erzeugt worden, so dass die Unterseite US des Bodenelements B in diesem Bereich in einer Stufe nach oben verspringt. Die Tiefe TB der Einformung B1 entspricht dabei der Dicke DP des Befestigungsabschnitts P3 des Unterfahrschutzes P, so dass bei an dem Bodenelement B befestigten Unterfahrschutz P die Unterseite des Befestigungsabschnitts P3 im Wesentlichen flächenbündig in die Unterseite US des Bodenelements B übergeht.

Die auf der Verlängerung B2 der unteren Decklage 5 stehende Stirnwand W ist als Sandwichelement ausgebildet, dessen Außenhaut jeweils durch eine Blechlage gebildet ist. Der zwischen den Blechlagen vorhandene Raum ist mit einem Schaumstoff gefüllt. In der Stirnwand W ist dabei zum einen ein Verstärkungselement W1 in Form eines Winkelstück eingesetzt, das mit seinem einen Schenkel W2 auf der Verlängerung B2 der unteren Decklage 10 des Bodenelements B steht.

An diesen Schenkel W2 sind in regelmäßigen Abständen über die Breite b der Stirnwand verteilt Gewindeöffnungen W3 ausgebildet. Ebenso sind in die Verlängerung der unteren Decklage 10 den Gewindeöffnungen W3 zugeordnete, hier nicht sichtbare Öffnungen eingeformt.

Der andere Schenkel des Verstärkungselements W1 ist mit der stirnseitigen Blechlage der Stirnwand W verklebt und an Tragprofilen W4 abgestützt, die ebenfalls in der Stirnwand W angeordnet sind. An den Tragprofilen W3 ist das Kühlgerät M aufgehängt.

In die Verlängerung B2 sind an zu den Gewindeöffnungen W3 der Stirnwand W korrespondierenden Stellen Langlöcher B3 eingeformt, deren Längsachsen sich jeweils in Längsrichtung L erstrecken.

Korrespondierend zu der Position der Länglöcher der Verlängerung B2 und der Gewindeöffnungen W₃ der Stirnwand W sind in den Befestigungsabschnitt P3 des Unterfahrschutzes P Durchgangsöffnungen P4 eingeformt, die auf der von der Unterseite US des Bodenelements B abgewandten Unterseite als Senkloch für eine Senkkopfschraube 7 ausgeführt sind.

Durch die Öffnungen P4 und die Langlöcher der Verlängerung B2 sind die Senkkopfschrauben 7 geführt, die in die Gewindeöffnungen W3 des Verstärkungselements W1 eingeschraubt sind. Über die Langlöcher der Verlängerung B2 werden Toleranzen der Positionierung von Unterfahrschutz P und Bodenelement B sowie Stirnwand W11 ausgeglichen. Gleichzeitig sind die Öffnungen P4 des Unterfahrschutzes P so ausgeführt, dass der Kopf der Senkkopfschraube 7 im fertig montierten Zustand mit seiner freien Oberseite im Wesentlichen flächenbündig zu der Unterseite des Befestigungsabschnitts P3 ausgerichtet ist.

Der sich im Wesentlichen parallel zur Stirnwand W erstreckende Prallabschnitt P1 des Unterfahrschutzes P ist zusätzlich durch Stützabschnitte P5 gegen die Stirnwand W abgestützt, die auf seiner der Stirnwand W zugewandten Rückseite an den Prallabschnitt P1 angeschweißt sind. Die Stützabschnitte P5 sind dabei in Draufsicht L-förmig geformt und liegen mit ihrem freien Schenkel P6 flach an der Stirnwand W an. Mit Hilfe von hier nicht gezeigten Schrauben 8, die durch in die Schenkel P6 eingeformte Durchgangsöffnungen P7 geführt sind, ist der Unterfahrschutz P auch in Längsrichtung L fest mit dem Sattelauflieger A verbunden.

Zum Austausch des Unterfarrschutzes P kann dieser durch Lösen der Schrauben 7,8 von dem Sattelauflieger A getrennt und durch einen neuen Unterfahrschutz P ersetzt werden.

### BZUGSZEICHEN

- 1: obere Decklage des Bodenelements B
- 2: Deckschicht der oberen Decklage 1
- 3: Tragschicht der oberen Decklage 1
- 4: Querstege
- 5: untere Decklage des Bodenelements B
- 6: Kammern des Bodenelements
- 7: Senkkopfschraube
- 8: Schrauben
- A: Sattelauflieger
- B: Bodenelement
- b: Breite des Bodenelements B
- B1: Einformung
- B2: stirnseitige Verlängerung der unteren Decklage 5
- B3: Langloch
- C: Fahrwerkschassis
- D: Dach
- DP: Dicke des Befestigungsabschnitts P3
- I: Innenraum
- K: Kofferaufbau
- L: Längsrichtung des Sattelaufliegers A
- L1,L2: Längsseitenwände
- M: Kühlgerät
- P: Unterfahrschutz
- P1: Prallabschnitt
- P2: Übergang
- P3: Befestigungsabschnitt
- P4: Öffnungen
- P5: Stützwinkel
- P6: an der Stirnwand W anliegende Schenkel der Stützwinkel P5
- P7: Durchgangsöffnungen
- R: Rückwand
- S: Sattelzug
- SF: Schaumfüllung
- TB: Tiefe der Einformung B1
- U: Umgebung
- US: Unterseite des Bodenelements
- W: Stirnwand
- W1: Verstärkungselement
- W2: Schenkel des Verstärkungselements W1
- W3: Gewindeöffnungen
- W4: Tragprofile
- Z: Zugmaschine

## Patentansprüche

1. Sattelauflieger eines aus dem Sattelauflieger (A) und einem Zugfahrzeug (Z) gebildeten Sattelzugs (S), mit einem Bodenelement (B), an dessen in Fahrtrichtung vorderer Stirnseite ein lösbar mit dem Bodenelement (B) verbundener Unterfahrschutz (P) vorgesehen ist, welcher verhindert, dass das Zugfahrzeug (Z) beim Unterfahren des Bodenelements (B) gegen die Stirnwand (W) des Sattelaufliegers (A) stößt, **dadurch gekennzeichnet, dass** an dem Unterfahrschutz (P) ein Befestigungsabschnitt (P3) ausgebildet ist, der an der Unterseite (US) des Bodenelements (B) anliegt.

2. Sattelauflieger nach Anspruch 1, **dadurch gekennzeichnet, dass** im an die Stirnseite angrenzenden Endbereich des Bodenelements (B) eine sich über die Breite des Befestigungsabschnitts (P3) erstreckende Einformung (B1) vorgesehen ist, in der der Befestigungsabschnitt (P3) sitzt.

3. Sattelauflieger nach Anspruch 2, **dadurch gekennzeichnet, dass** die Tiefe (TB) der Einformung (B1) der Dicke (DP) des Befestigungsabschnitts (P3) entspricht, so dass die Unterseite des Befestigungsabschnitts (P3) im Wesentlichen flächenbündig zur Unterseite (US) des Bodenelements (B) ausgerichtet ist.

4. Sattelauflieger nach einem der voranstehenden Ansprüche, **dadurch gekennzeichnet, dass** in dem dem Bodenelement (B) zugeordneten Anschlussbereich der Stirnwand (W) ein Verstärkungselement (W1) vorgesehen ist, mit dem der Unterfahrschutz (P) verschraubt ist.

5. Sattelauflieger nach Anspruch 4, **dadurch gekennzeichnet, dass** in der Stirnwand (W) mindestens ein Trägerprofil (W4) vorgesehen ist, an dem ein an der Stirnwand (W) zu montierendes Anbauteil (M) befestigbar ist.

6. Sattelauflieger nach einem der voranstehenden Ansprüche, **dadurch gekennzeichnet, dass** der Unterfahrschutz (P) mit dem Bodenelement (B) verschraubt ist.

7. Sattelauflieger nach Anspruch 6, **dadurch gekennzeichnet, dass** die Verschraubung von der Unterseite (US) des Sattelaufliegers (A) her erfolgt.

8. Sattelauflieger nach Anspruch 6 und 7, **dadurch gekennzeichnet, dass** an dem Bodenelement (B) eine Verlängerung (B2) ausgebildet ist, an der der Unterfahrschutz (P) befestigt ist.

9. Sattelauflieger nach Anspruch 7 und 8, **dadurch gekennzeichnet, dass** in die Verlängerung (B2) mindestens eine als Langloch (B3) ausgebildete Durchgangsöffnung eingeformt ist und dass die Verschraubung (7) gegen ein auf der Oberseite der Verlängerung (B2) vorhandenes Befestigungselement (W3) erfolgt.

10. Sattelauflieger nach einem der voranstehenden Ansprüche, **dadurch gekennzeichnet, dass** der Unterfahrschutz (P) mindestens einen Stützabschnitt (P5) aufweist, mit dem er gegen die Stirnseite (W) des Sattelaufliegers (A) abgestützt ist.

11. Sattelauflieger nach Anspruch 10, **dadurch gekennzeichnet, dass** der Unterfahrschutz (P) über den Stützabschnitt (P5) mit der Stirnwand (W) des Sattelaufliegers (A) verschraubt ist.

## Claims

1. Semi-trailer of an articulated lorry (S) comprising the semi-trailer (A) and a drawing vehicle (Z), having a base element (B) on the front end of which in the driving direction an underride protection (P) is provided which is detachably connected to the base element (B) and which, when the base element (B) is underridden, prevents the drawing vehicle (Z) from knocking against the front wall (W) of the semi-trailer (A), **characterised in that** a fastening section (P3) is formed on the underride protection (P) and abuts on the underside (US) of the base element (B).

2. Semi-trailer according to Claim 1, **characterised in that** an indentation (B1) extending across the width of the fastening section (P3) is provided in the end area of the base element (B) adjacent to the front end, in which indentation (B1) the fastening section (P3) fits.

3. Semi-trailer according to Claim 2, **characterised in that** the depth (TB) of the indentation (B1) corresponds to the thickness (DP) of the fastening section (P3), so that the underside of the fastening section (P3) is aligned substantially flush with the underside (US) of the base element (B).

4. Semi-trailer according to any one of the preceding claims, **characterised in that** a reinforcement element (W1) is provided in the attachment area of the front wall (W) assigned to the base element (B), to which reinforcement element (W1) the underride protection (P) is screwed.

5. Semi-trailer according to Claim 4, **characterised in that** at least one carrier section (W4) is provided in the front wall (W), to which an attachment part (M) to be mounted on the front wall (W) can be fastened.

6. Semi-trailer according to any one of the preceding claims, **characterised in that** the underride protection (P) is screwed to the base element (B).

7. Semi-trailer according to Claim 6, **characterised in that** the screw fastening is carried out from the underside (US) of the semi-trailer (A).

8. Semi-trailer according to Claims 6 and 7, **characterised in that** an extension (B2) is formed on the base element (B), to which extension (B2) the underride protection (P) is fastened.

9. Semi-trailer according to Claims 7 and 8, **characterised in that** at least one through-opening designed as an oblong hole (B3) is formed into the extension (B2), and **in that** the screw fastening (7) takes place against a fastening element (W3) which is present on the top of the extension (B2).

10. Semi-trailer according to any one of the preceding claims, **characterised in that** the underride protection (P) has at least one support section (P5), with which it is supported against the front end (W) of the semi-trailer (A).

11. Semi-trailer according to Claim 10, **characterised in that** the underride protection (P) is screwed to the front wall (W) of the semi-trailer (A) via the support section (P5).

## Revendications

1. Semi-remorque d'un train routier (S), composé de la semi-remorque (A) et d'un véhicule tracteur (Z), laquelle semi-remorque est dotée d'élément de fond (B), sur la face frontale avant vue dans le sens de marche, duquel est prévue une protection anti-encastrement (P), qui, reliée de manière amovible à l'élément de fond (B), empêche le véhicule tracteur (Z) de heurter la paroi frontale (W) de la semi-remorque (A) lors d'un glissement sous l'élément de fond (B), **caractérisée en ce que**, sur la protection anti-encastrement (P), est formée une section de fixation (P3), qui porte contre la face inférieure (US) de l'élément de fond (B).

2. Semi-remorque selon la revendication 1, **caractérisée en ce que**, dans la zone finale de l'élément de fond (B), adjacente à la face frontale, est prévue un enfoncement (B1), qui, s'étendant sur la largeur de la section de fixation (P3), est située dans la section de fixation (P3),

3. Semi-remorque selon la revendication 2, **caractérisée en ce que** la profondeur (TB) de l'enfoncement(B1) correspond à l'épaisseur de la section de fixation (P3), de sorte que la face inférieure de la section de fixation (P3) soit essentiellement orientée vers la face inférieure (US) de l'élément de fond (B).

4. Semi-remorque selon l'une des revendications précédentes, **caractérisée en ce que**, dans la zone de raccordement de la paroi frontale (W), associée à l'élément de fond (B), est prévu un élément de renforcement (W1), avec lequel la protection anti-encastrement (P) est vissée.

5. Semi-remorque selon la revendication 4, **caractérisée en ce que**, dans la paroi frontale (W), est prévu au moins un profilé de support (W4), sur lequel peut être fixé une pièce rapportée (M), destinée à être montée à la paroi frontale (W).

6. Semi-remorque selon l'une des revendications précédentes, **caractérisée en ce que** la protection anti-encastrement (P) est vissée à l'élément de fond (B).

7. Semi-remorque selon la revendication 6, **caractérisée en ce que** le vissage est effectué à partir de la face inférieure (US) de la semi-remorque (A).

8. Semi-remorque selon les revendications 6 et 7, **caractérisée en ce que**, sur l'élément de sol (B), est formé un prolongement (B2), auquel la protection anti-encastrement (P) est fixée.

9. Semi-remorque selon revendication 7 ou 8, **caractérisée en ce que**, dans le prolongement (B2), est pratiquée au moins une ouverture de passage, en forme de trou oblong (B3), et que le vissage (7) est effectué contre un élément de fixation (W3), qui est prévu sur la face supérieure du prolongement (B2).

10. Semi-remorque selon l'une des revendications précédentes, **caractérisée en ce que** la protection anti-encastrement (P) est dotée d'au moins une section d'appui (P5), avec laquelle elle s'appuie contre la paroi frontale (W) de la semi-remorque (A).

11. Semi-remorque selon la revendication 10, **caractérisée en ce que** la protection anti-encastrement (P) est vissée à la paroi frontale (W) de la semi-remorque (A) par l'intermédiaire de la section d'appui (P5).
